# FASCICULE DE BREVET EUROPEEN

(11) **EP 1 188 375 B1**
(45) Date de publication et mention de la délivrance du brevet: **24.11.2004**
(21) Numéro de dépôt: 01440299.4
(22) Date de dépôt: 12.09.2001
(51) Int. Cl.: A01M 7/00

(54) **Pulvérisateur agricole**
Landwirtschafliche Feldspritze
Agricultural field-crop sprayer

(30) Priorité: 14.09.2000 FR 0011847
(43) Date de publication de la demande: 20.03.2002
(73) Titulaire: Kuhn-Nodet S.A., 77876 Montereau (FR)
(72) Inventeur: Guesdon, Alain, 77123 Noisy sur Ecole (FR)
(74) Mandataire: Andres, Jean-Claude

(56) Documents cités:
- WO-A-95/03688
- FR-A- 2 714 572
- US-A- 4 092 993

## Description

La présente invention concerne le domaine technique des pulvérisateurs agricoles. Elle se rapporte plus particulièrement à un procédé de commande, d'un circuit d'eau équipant une telle machine, permettant de configurer ledit circuit d'eau en mode "incorporation".

Les pulvérisateurs agricoles sont utilisés pour épandre, sous forme de gouttelettes, une bouillie de traitement sur des plantes. A cet effet, lesdits pulvérisateurs comportent divers éléments reliés entre eux par un circuit d'eau. Ces éléments sont notamment une cuve principale contenant la bouillie, et des buses de pulvérisation destinées à répartir ladite bouillie sur les plantes à traiter. La pulvérisation consiste à pomper la bouillie, grâce au circuit d'eau, de la cuve principale jusqu'aux buses, tout en déplaçant lesdites buses par rapport aux plantes à traiter.

Avant de procéder effectivement à la pulvérisation, l'utilisateur doit entre autres préparer la bouillie de traitement. En effet pour des raisons évidentes de stockage, le composé actif de la bouillie est généralement conditionné sous forme concentré dans des bidons. La préparation de la bouillie consiste donc à diluer un ou plusieurs composés actifs, par exemple des produits phytosanitaires, dans de l'eau. Pour ce faire et dans un souci de sécurité pour l'utilisateur, la plupart des pulvérisateurs agricoles comportent également un incorporateur. Celui-ci peut être fixe ou mobile par rapport au pulvérisateur, et il est de préférence accessible depuis le sol. L'incorporateur se compose d'un bac dans lequel l'utilisateur déverse les bidons de composé actif. Lors de la préparation de la bouillie, le bac est vidangé via le circuit d'eau dans la cuve principale.

Après la pulvérisation, il est nécessaire de rincer tous les éléments qui ont été en contact avec la bouillie de traitement. En effet ladite bouille a tendance à former, lorsqu'elle stagne, un dépôt néfaste au bon fonctionnement dudit pulvérisateur. Dans ce but, la plupart des pulvérisateurs comportent en sus une réserve d'eau stockée dans une cuve de rinçage. Le rinçage consiste à pomper cette réserve d'eau, via le circuit d'eau, de ladite cuve de rinçage jusqu'aux éléments souillés. Les résidus de bouillie, fortement dilués dans l'eau de rinçage, sont finalement expulsés par les buses de pulvérisation sur lesdites plantes.

En générale, le circuit d'eau d'un pulvérisateur agricole permet également de remplir la cuve principale en puisant l'eau provenant d'une rivière par exemple. De plus, il est courant que ledit circuit d'eau permet aussi de vidanger ladite cuve principale en transvasant la bouillie de traitement vers un réservoir extérieur.

Pour effectuer les différentes fonctions énumérées ci-dessus, le circuit d'eau comporte au moins une pompe, un réseau de conduites et une pluralité de vannes. D'une manière connue de l'homme de l'art, la position desdites vannes détermine le type de fonction réalisé par le circuit d'eau ("pulvérisation", "incorporation", "rinçage", "remplissage", "vidange").

Avec la plupart des pulvérisateurs agricoles actuellement sur le marché et notamment le pulvérisateur décrit dans la demande de brevet **WO 95/03688,** l'utilisateur configure le circuit d'eau en manoeuvrant individuellement chacune des vannes afin de positionner celles-ci suivant un schéma correspondant à la fonction désirée. Or un pulvérisateur agricole comporte généralement un nombre important de vannes, et chaque vanne peut être orientée suivant au moins deux positions. La configuration d'un tel circuit d'eau, que l'utilisateur modifie à chaque changement de fonction, constitue donc une perte de temps relativement importante. De plus avec ce type de manipulation, le risque d'erreur dans le positionnement des vannes ou tout simplement le risque d'oublier d'orienter une vanne n'est pas négligeable. Dans un tel cas de figure, la fonction réalisée par le circuit d'eau n'est pas celle désirée par l'utilisateur. Cela peut avoir comme conséquence, par exemple, la perte dudit composé actif.

Pour résoudre ce problème, la demande de brevet **FR 2 714 572** décrit un pulvérisateur agricole où des vannes du circuit d'eau sont commandées par un boîtier de contrôle. Avec ce pulvérisateur connu, l'utilisateur choisit tout d'abord la fonction à réaliser au moyen d'un sélecteur. Puis l'organe de contrôle pilote électriquement différentes vannes du circuit d'eau afin de configurer ce dernier dans le mode adéquat. Cependant, l'emploi d'une telle solution engendre vraisemblablement un surcoût de fabrication non négligeable. De plus cette solution nécessite toujours l'intervention de l'utilisateur, lors de la préparation de la bouillie de traitement par exemple, pour indiquer le type de fonction à réaliser. Par conséquent les risques d'erreur ne sont pas supprimés. Par exemple, l'utilisateur peut oublier de sélectionner la fonction "incorporation". Il peut également sélectionner une mauvaise fonction.

Le but de la présente invention vise donc à remédier aux différents inconvénients de l'état de la technique en proposant une solution, pour un pulvérisateur agricole comportant un incorporateur mobile, afin de supprimer tout risque d'oubli et d'erreur de manipulation lors de la configuration du circuit d'eau en mode "incorporation".

A cet effet, il est proposé un procédé de commande de la configuration en mode "incorporation" d'un circuit d'eau d'un pulvérisateur agricole, ledit pulvérisateur comprenant un incorporateur pouvant occuper au moins une position de transport et au moins une position de remplissage, caractérisé par le fait qu'un déplacement dudit incorporateur d'une position de transport à une position de remplissage commande la configuration dudit circuit d'eau en mode "incorporation". Avec les pulvérisateurs agricoles à incorporateur mobile et lors de la préparation de la bouillie, l'utilisateur amène l'incorporateur dans une position de remplissage afin de faciliter le versement des bidons de composé actif. Avec le procédé de commande de la présente invention, ce geste préalable à toute incorporation a pour effet de configurer automatiquement, et donc rapidement, le circuit d'eau du pulvérisateur à la fonction adéquate. L'utilisateur n'agissant plus manuellement sur lesdites vannes, le risque d'oubli et d'erreur de manipulation est donc éliminé.

La présente invention concerne également un pulvérisateur agricole pour la mise en oeuvre de ce procédé de commande. Ledit pulvérisateur comporte donc un incorporateur mobile et un circuit d'eau configuré par des vannes. Selon une autre caractéristique de la présente invention, le déplacement de l'incorporateur agit directement sur les vannes participant à la configuration en mode "incorporation" du circuit d'eau. Par conséquent, les moyens de mise en oeuvre du procédé de la présente invention sont simples et donc peu onéreux.

D'autres caractéristiques de l'invention apparaîtront encore dans les autres sous-revendications et dans la description suivante d'un exemple de réalisation non limitatif de l'invention représenté sur les dessins annexés sur lesquels :
- la **figure 1** représente, en vue de coté et au transport, un pulvérisateur agricole conforme à l'invention,
- la **figure 2** est un schéma du circuit d'eau équipant le pulvérisateur agricole de la figure 1, ledit circuit d'eau étant configuré en mode "pulvérisation",
- la **figure 3** est un schéma du circuit d'eau équipant le pulvérisateur agricole de la figure 1, ledit circuit d'eau étant configuré en mode "rinçage cuve",
- la **figure 4** est un schéma du circuit d'eau équipant le pulvérisateur agricole de la figure 1, ledit circuit d'eau étant configuré en mode "rinçage rampe",
- la **figure 5** est un schéma du circuit d'eau équipant le pulvérisateur agricole de la figure 1, ledit circuit d'eau étant configuré en mode "remplissage",
- la **figure 6** est un schéma du circuit d'eau équipant le pulvérisateur agricole de la figure 1, ledit circuit d'eau étant configuré en mode "vidange",
- la **figure 7** est un schéma du circuit d'eau équipant le pulvérisateur agricole de la figure 1, ledit circuit d'eau étant configuré en mode "incorporation",
- la **figure 8** représente, vu suivant la flèche I définie sur la figure 1, un incorporateur équipant le pulvérisateur agricole de la figure 1, ledit incorporateur étant en position de transport,
- la **figure 9** représente, également vu suivant la flèche I, l'incorporateur en position de remplissage,
- la **figure 10** représente, vu suivant le flèche II définie sur la figure 8, l'incorporateur en position de transport.

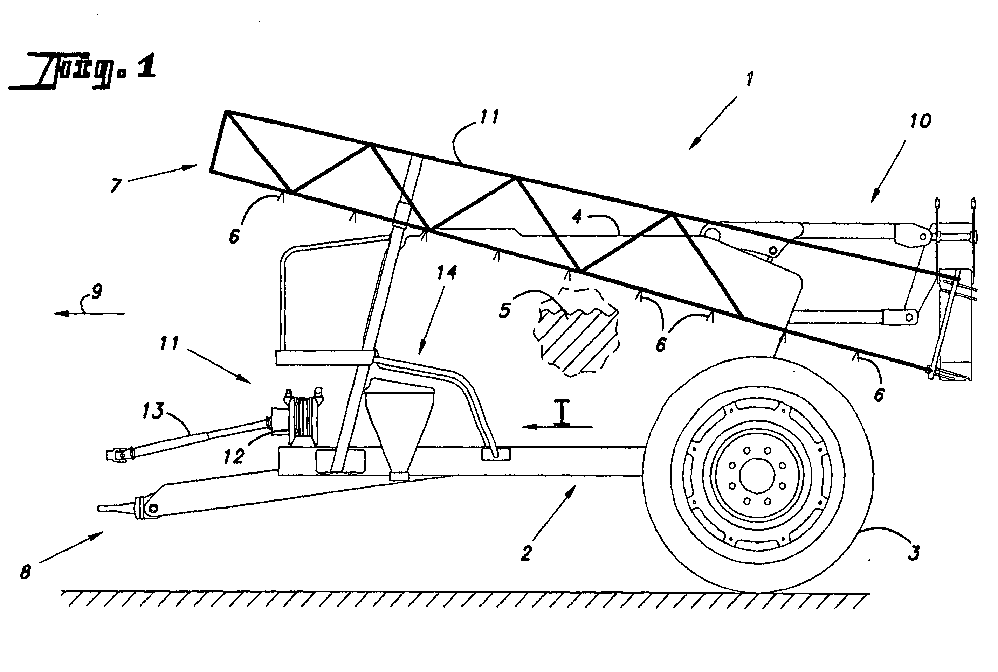

La figure 1 représente un pulvérisateur agricole (1), conforme à l'invention, en position de transport. Ledit pulvérisateur (1) comporte un châssis (2) qui roule sur le sol au moyen de deux roues (3). Ledit châssis (2) supporte d'une part une cuve principale (4) contenant une bouillie de traitement (5), et d'autre part une pluralité de buses de pulvérisation (6) disposées à intervalle sensiblement régulier le long d'une rampe d'épandage (7). Ledit châssis (2) est lié, de manière connue, à un véhicule moteur (non représenté) au moyen d'un timon (8). Ledit véhicule moteur tracte ledit pulvérisateur (1) suivant une direction d'avance (9). Dans cet exemple de réalisation, ledit pulvérisateur (1) est donc de type traîné. Il va de soi que la présente invention concerne également des pulvérisateurs de type porté ainsi que des pulvérisateurs automoteurs.

Lors du travail, ledit pulvérisateur agricole (1) est déplacé sur un champ comportant des plantes à traiter. Ladite rampe d'épandage (7) est disposée transversalement à ladite direction d'avance (9), de part et d'autre d'un plan vertical médian dudit pulvérisateur (1). Ladite rampe d'épandage (7) est liée audit châssis (2) au moyen d'un dispositif de liaison (10). La hauteur de pulvérisation desdites buses (6) peut ainsi être adaptée à la taille plus ou moins importante des plantes à traiter. Pour de plus amples informations sur ledit dispositif de liaison (10), l'homme du métier pourra se référer à la demande de brevet français enregistrée sous le numéro **00/03454.** Pour sa part, ladite bouillie de traitement (5) est pompée, au moyen d'un circuit d'eau (11), depuis la cuve principale (4) pour être déposée, grâce auxdites buses de pulvérisation (6), sur lesdites plantes.

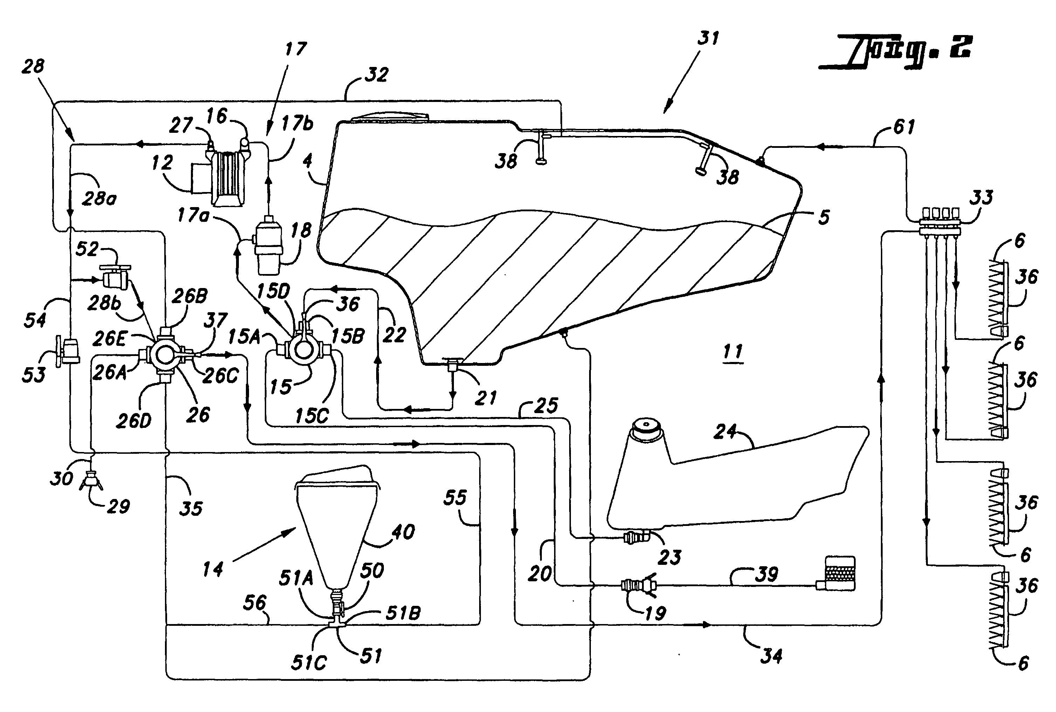

Hormis la fonction "pulvérisation" décrite ci-dessus, ledit circuit d'eau (11) est également amené à réaliser d'autres fonctions, par exemple : "remplissage", "incorporation", "rinçage" et "vidange". A cet effet dans l'exemple de réalisation représenté sur les figures 2 à 7, ledit circuit d'eau (11) comporte notamment une pompe (12), un réseau de conduites et une pluralité de vannes. D'une manière connue de l'homme de l'art, la position desdites vannes détermine le type de fonction réalisée par ledit circuit d'eau (11). D'une manière également connue de l'homme de l'art, ladite pompe (12) est entraînée en rotation, au moyen d'un arbre de transmission à joints universels (13), par la prise de force (non représentée) dudit véhicule moteur. Les différentes autres fonctions énumérées ci-dessus seront décrites ultérieurement.

Comme visible sur la figure 1, ledit pulvérisateur agricole (1) comporte en sus un incorporateur (14). Le rôle et la réalisation dudit incorporateur (14) seront également décrits ultérieurement.

Pour des raisons de clarté, ledit réseau de conduites et lesdites vannes n'apparaissent pas sur la figure 1.

La figure 2 représente, schématiquement, un exemple de réalisation d'un circuit d'eau (11) pouvant équiper le pulvérisateur agricole (1) de la figure 1. Ledit circuit d'eau (11) comporte une première vanne de sélection (15) disposée en amont de ladite pompe (12). Cette première vanne de sélection (15) permet à l'utilisateur de choisir la source d'alimentation de ladite pompe (12). A cet effet, ladite première vanne de sélection (15) comporte trois voies d'entrée (15A, 15B, 15C) et une voie de sortie (15D). Ladite voie de sortie (15D) de ladite première vanne de sélection (15) est reliée à l'orifice d'aspiration (16) de ladite pompe (12) au moyen d'une première conduite (17). La première voie d'entrée (15A) est reliée à une première prise extérieure (19) au moyen d'une deuxième conduite (20). Ladite première prise extérieure (19) permet avantageusement d'alimenter ledit circuit d'eau (11) à partir d'une source extérieure audit pulvérisateur (1). La deuxième voie d'entrée (15B) est reliée à un siphon (21), disposé au point le plus bas de ladite cuve principale (4) (représentée en coupe sur les figures 2 à 7), au moyen d'une troisième conduite (22). Pour sa part, la troisième voie d'entrée (15C) est reliée à un deuxième siphon (23), disposé cette fois-ci au point le plus bas d'une cuve de rinçage (24), au moyen d'une quatrième conduite (25). Ladite cuve de rinçage (24) sera décrite ultérieurement.

Ledit circuit d'eau (11) comporte également une deuxième vanne de sélection (26) disposée en aval de ladite pompe (12). Cette deuxième vanne de sélection (26) permet à l'utilisateur de choisir la destination du fluide refoulé par ladite pompe (12). A cet effet, ladite deuxième vanne de sélection (26) comporte, pour sa part, quatre voies de sortie (26A, 26B, 26C, 26D) et une voie d'entrée (26E). Ladite voie d'entrée (26E) de ladite deuxième vanne de sélection (26) est reliée à l'orifice de refoulement (27) de ladite pompe (12) au moyen d'une cinquième conduite (28). La première voie de sortie (26A) est reliée à une deuxième prise extérieure (29) au moyen d'une sixième conduite (30). Ladite deuxième prise extérieure (29) permet avantageusement de transvaser le contenue de la cuve principale (4) dans un réservoir extérieur audit pulvérisateur (1). La deuxième voie de sortie (26B) est reliée à un dispositif de rinçage (31) de ladite cuve principale (4) au moyen d'une septième conduite (32). Ledit dispositif de rinçage (31) sera décrit ultérieurement. La troisième voie de sortie (26C) est reliée à un dispositif de répartition (33) au moyen d'une huitième conduite (34). Ledit dispositif de répartition (33) sera également décrit ultérieurement. Pour sa part, la quatrième voie de sortie (26D) de ladite deuxième vanne de sélection (26) est reliée à ladite cuve principale (4) au moyen d'une neuvième conduite (35).

Dans l'exemple de réalisation représentée sur les figures 2 à 7, ledit circuit d'eau (11) comporte également un filtre (18) connecté sur ladite première conduite (17). Ledit filtre (18), disposé donc entre ladite première vanne de sélection (15) et ladite pompe (12), est destiné à protéger ladite pompe (12) contre d'éventuelles impuretés présentes dans le fluide aspiré. Ladite première conduite (17) comporte donc deux tronçons (17a, 17b). Le premier tronçon (17a) relie ladite première vanne de sélection (15) audit filtre (18). Pour sa part, le deuxième tronçon (17b) relie ledit filtre (18) à ladite pompe (12).

Dans l'exemple de réalisation représenté sur les figures 2 à 7, chaque vanne de sélection (15, 26) comporte également une poignée (36, 37) respective. Ainsi ladite poignée (36) permet à l'utilisateur de mettre en communication, pour ladite première vanne de sélection (15), une desdites voies d'entrée (15A, 15B, 15C) avec ladite voie de sortie (15D). Pour sa part, ladite poignée (37) permet à l'utilisateur de mettre en communication, pour ladite deuxième vanne de sélection (26), ladite voie d'entrée (26E) avec l'une desdites voies de sortie (26A, 26B, 26C, 26D).

Sur les figures 2 à 7, chaque flèche accolée à une conduite indique le sens d'écoulement du fluide à l'intérieur de ladite conduite. L'absence de flèche sur une conduite indique, par contre, que ladite conduite ne transporte pas de fluide lors de la fonction considérée.

La figure 2 représente plus particulièrement le circuit d'eau (11) configuré en mode "pulvérisation". Lors du travail, cette fonction est utilisée pour déposer, sous forme de gouttelettes, ladite bouille de traitement (5) sur les plantes à traiter.

Pour ce faire, l'utilisateur met d'une part en communication, au moyen de ladite première vanne de sélection (15), l'orifice d'aspiration (16) de ladite pompe (12) avec le siphon (21) de ladite cuve principale (4). D'autre part, l'utilisateur met en communication, au moyen de ladite deuxième vanne de sélection (26), l'orifice de refoulement (27) de ladite pompe (12) avec ledit dispositif de répartition (33).

D'une manière connue de l'homme de l'art, ledit dispositif de répartition (33) permet de régler et de réguler la quantité de bouillie de traitement (5) déposée sur lesdites plantes. D'une manière également connue de l'homme de l'art, lesdites buses de pulvérisation (6) sont avantageusement regroupées par tronçons (36). Ainsi en coupant l'alimentation en bouillie (5) d'un ou plusieurs tronçons (36), l'utilisateur peut adapter la largeur de travail du pulvérisateur (1). Le surplus de bouillie de traitement (5), arrivant de ladite pompe (12) et non répartie aux différentes buses (6), est retourné dans ladite cuve principale (4) au moyen d'une dixième conduite (37).

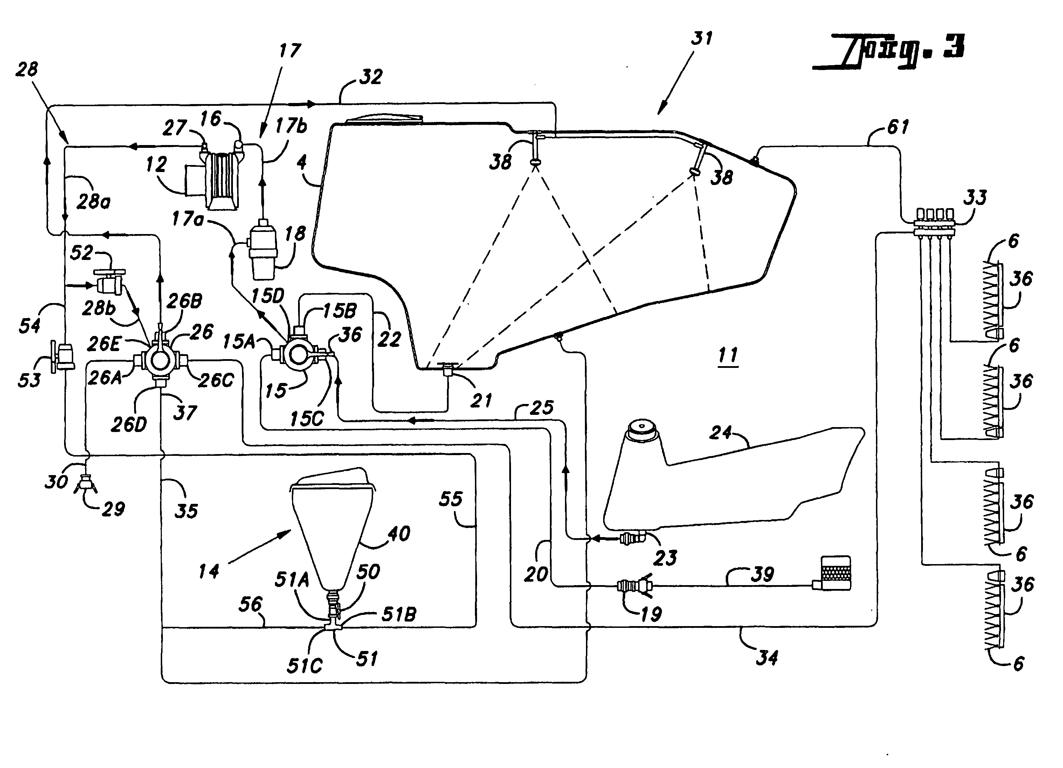

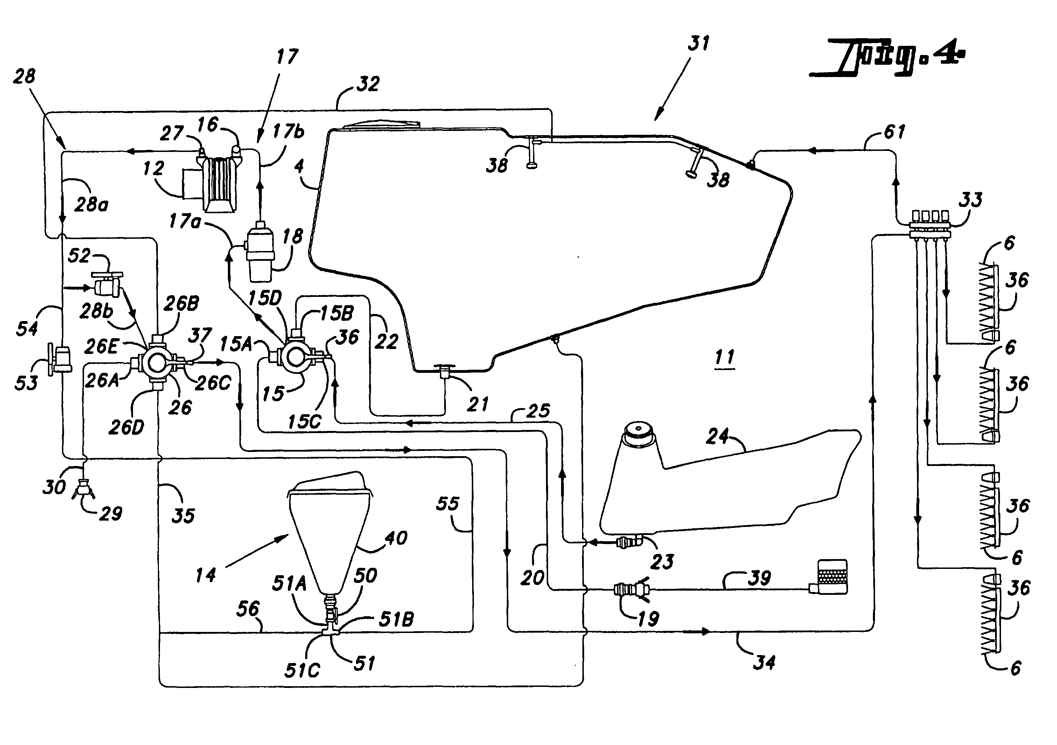

Les figures 3 et 4 représentent le circuit d'eau (11) de la figure 2, configuré cette fois-ci en mode "rinçage". Cette fonction est généralement utilisée une fois la pulvérisation est terminée. En effet lorsque ladite bouillie de traitement (5) stagne pendant un certain temps, celle-ci a tendance à former un dépôt néfaste au bon fonctionnement dudit circuit d'eau (11). Pour éviter ce dépôt, il est nécessaire de rincer tous les éléments qui ont été en contact avec ladite bouillie (5). D'une manière connue de l'homme de l'art, le pulvérisateur agricole (1) comporte à cet effet une cuve de rinçage (24). Ladite cuve de rinçage (24) (non représentée sur la figure 1) permet de stocker une réserve d'eau. Lors du rinçage, cette réserve d'eau circule dans tous les éléments souillés. Finalement les résidus de bouillie de traitement (5), fortement dilués dans l'eau de rinçage, sont expulsés par lesdites buses de pulvérisation (6).

La figure 3 représente plus particulièrement une configuration dudit circuit d'eau (11) permettant de rincer ladite cuve principale (4). A cet effet, l'utilisateur met d'une part en communication, au moyen de ladite première vanne de sélection (15), l'orifice d'aspiration (16) de ladite pompe (12) avec le siphon (23) de ladite cuve de rinçage (24). D'autre part, l'utilisateur met en communication, au moyen de ladite deuxième vanne de sélection (26), l'orifice de refoulement (27) de ladite pompe (12) avec ledit dispositif de rinçage (31). D'une manière connue de l'homme de l'art, ledit dispositif de rinçage (31) se compose d'une pluralité de buses de rinçage (38). Lesdites buses de rinçage (38) sont destinées à asperger les parois intérieures de ladite cuve principale (4) avec l'eau contenue dans la cuve de rinçage (24). Pour des raisons de clarté, seules deux buses de rinçage (38) ont été représentées sur les figures 2 à 7. Il va de soi qu'en réalité la totalité des parois intérieures de la cuve principale (4) est atteinte par le jet desdites buses de rinçage (38).

Afin de terminer le rinçage dudit pulvérisateur agricole (1), l'utilisateur configure ensuite ledit circuit d'eau (11) en mode "rinçage rampe" tel que représenté sur la figure 4. Cette fonction permet, cette fois-ci, de pomper l'eau contenue dans la cuve de rinçage (24) et de la faire circuler notamment dans la conduite (34), le dispositif de répartition (33), la dixième conduite (61) et lesdites buses de pulvérisation (6). Pour ce faire, l'utilisateur met d'une part en communication, au moyen de ladite première vanne de sélection (15), l'orifice d'aspiration (16) de ladite pompe (12) avec le siphon (23) de ladite cuve de rinçage (24). D'autre part, l'utilisateur met en communication, au moyen de ladite deuxième vanne de sélection (26), l'orifice de refoulement (27) de ladite pompe (12) avec ledit dispositif de répartition (33).

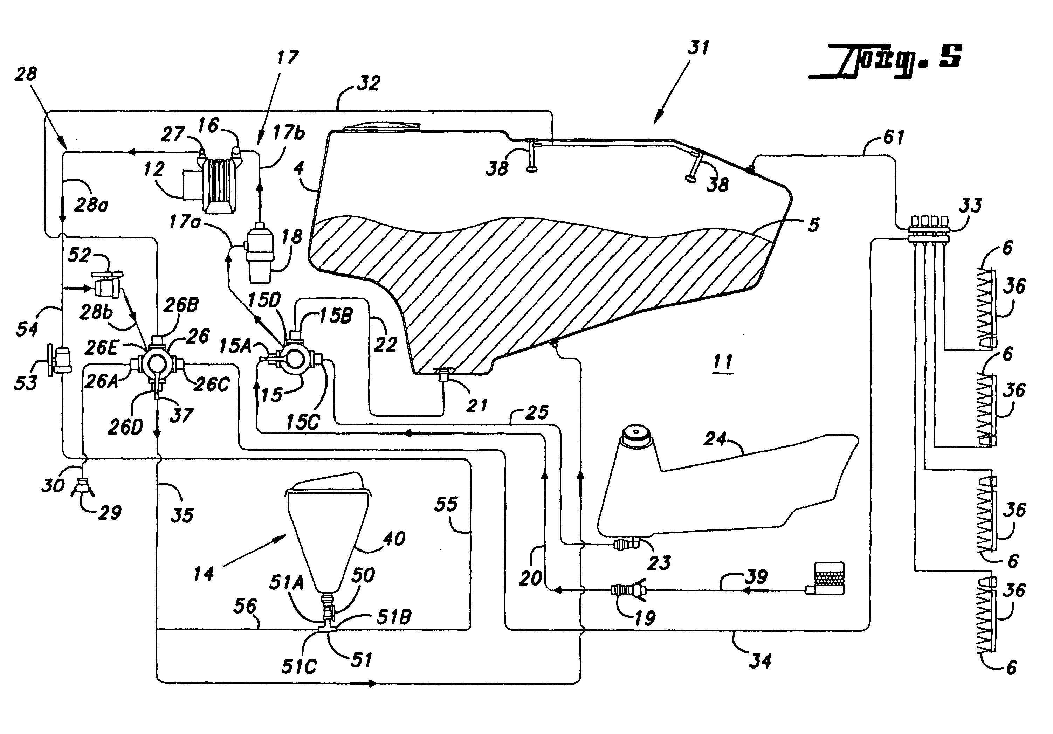

La fonction "aspiration", représentée sur la figure 5, permet à l'utilisateur de remplir ladite cuve principale (4) à partir d'une source extérieure. Ainsi en raccordant ladite première prise extérieure (19) à une crépine (39), l'utilisateur peut avantageusement puiser l'eau d'une rivière. Pour ce faire, l'utilisateur met d'une part en communication, au moyen de ladite première vanne de sélection (15), l'orifice d'aspiration (16) de ladite pompe (12) avec ladite première prise extérieure (19). D'autre part, l'utilisateur met en communication, au moyen de ladite deuxième vanne de sélection (26), l'orifice de refoulement (27) de ladite pompe (12) avec ladite cuve principale (4).

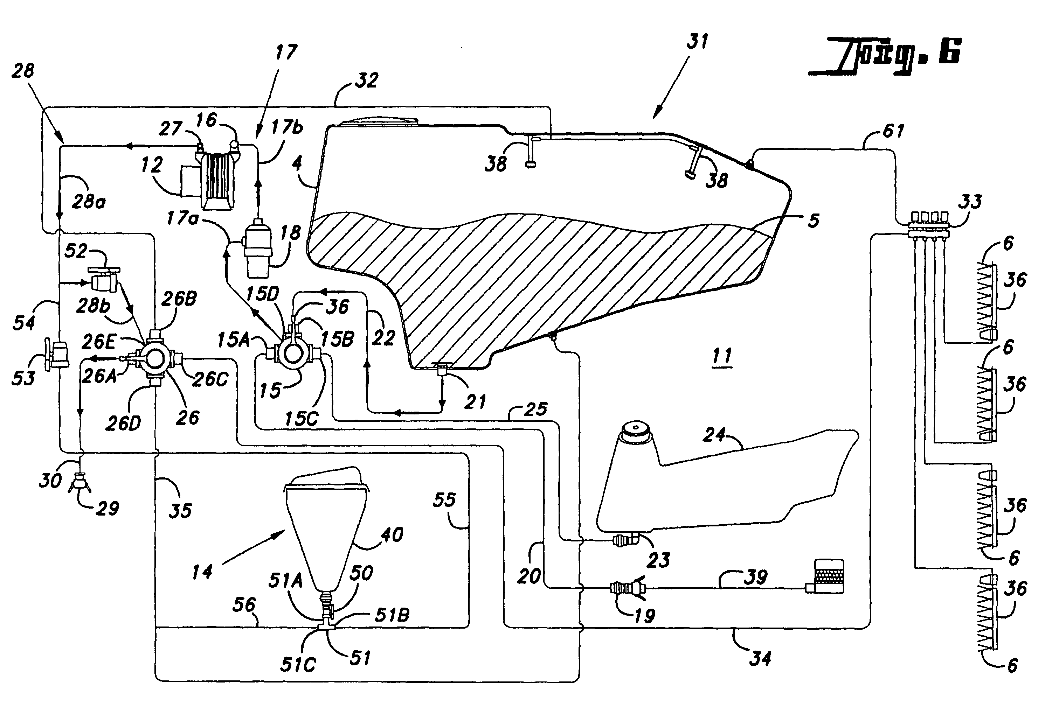

Par contre la fonction "vidange", représentée sur la figure 6, permet à l'utilisateur de transvaser le contenu de ladite cuve principale (4) dans un réservoir extérieur (non représenté). Après avoir raccordé ledit réservoir extérieur avec ladite deuxième prise extérieure (29), l'utilisateur met d'une part en communication, au moyen de ladite première vanne de sélection (15), l'orifice d'aspiration (16) de ladite pompe (12) avec le siphon (21) de ladite cuve principale (4). D'autre part, l'utilisateur met en communication, au moyen de ladite deuxième vanne de sélection (26), l'orifice de refoulement (27) de ladite pompe (12) avec ladite deuxième prise extérieure (29).

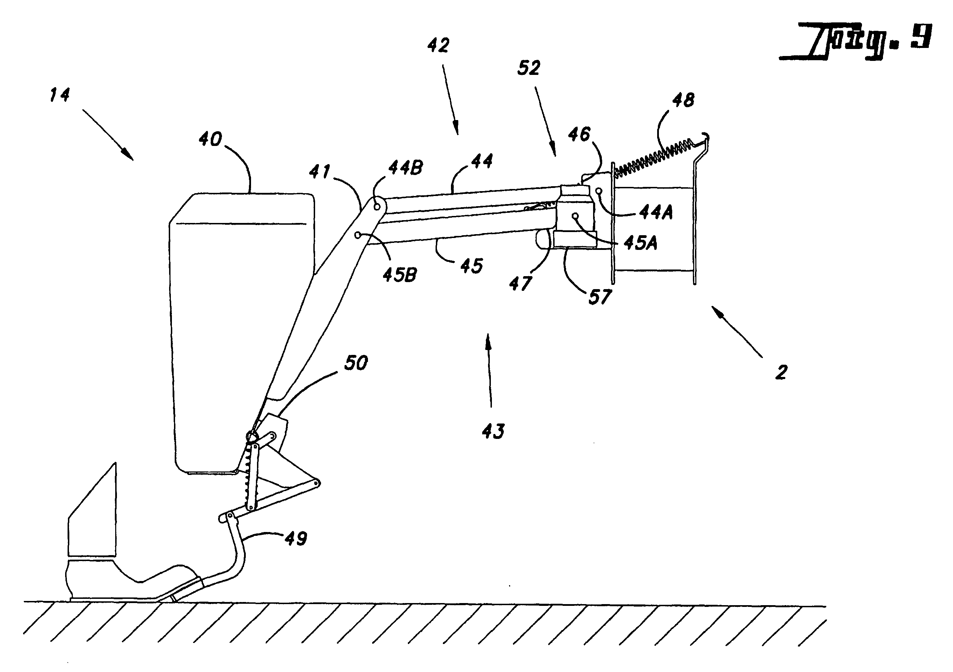

Avant de procéder effectivement à la pulvérisation, l'utilisateur doit préparer la bouillie de traitement (5). En effet pour des raisons évidentes de stockage, le composé actif de la bouillie (5) est généralement conditionné sous forme concentré dans des bidons. La préparation de la bouillie (5) consiste donc à diluer un ou plusieurs composés actifs, par exemple des produits phytosanitaires, dans de l'eau. Pour ce faire, ledit pulvérisateur agricole (1) comporte un incorporateur (14). Ledit incorporateur (14) se compose d'un bac (40) dans lequel l'utilisateur déverse les bidons de composé actif. Lors de la préparation de ladite bouillie (5), ledit bac (40) est vidangé via le circuit d'eau (11) dans la cuve principale (4). Ledit incorporateur (14) est avantageusement mobile par rapport audit pulvérisateur (1). Il peut ainsi occuper une position de transport (figures 1, 8 et 10) ou une position de remplissage (figure 9).

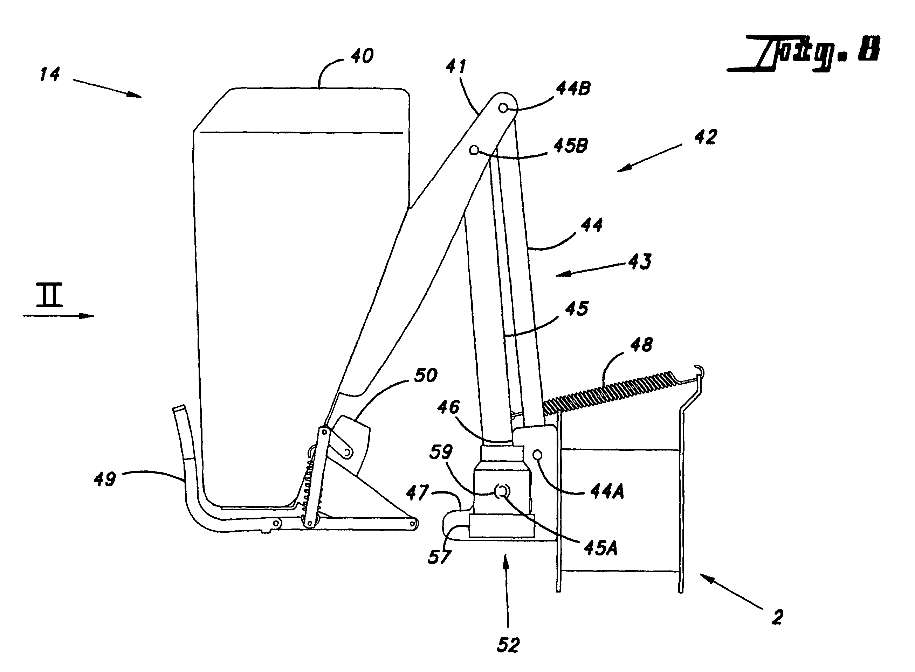

On notera que pour des raisons de clarté, ledit réseau de conduites dudit circuit d'eau (11) n'apparaît pas sur les figures 8 à 10.

Dans l'exemple de réalisation représenté sur les figures 8 à 10, ledit bac (40) est supporté par une ossature (41). Pour sa part, ladite ossature (41) est liée audit châssis (2) au moyen d'un bras articulé (42). Ledit bras articulé (42) est réalisé sous la forme d'un parallélogramme (43) composé d'une bielle supérieure (44) et d'une bielle inférieure (45). Lesdites bielles (44, 45) sont liées, d'une part audit châssis (2) au moyen d'une articulation respective (44A, 45A), et d'autre part à ladite ossature (41) au moyen d'une articulation respective (44B, 45B). Lesdites articulations (44A, 45A, 44B, 45B) sont avantageusement du type pivot dont les axes respectifs sont sensiblement parallèles entre eux. Ledit parallélogramme (43) s'étend suivant un plan d'extension sensiblement vertical, et le débattement angulaire de la bielle inférieure (45) autour de l'articulation (45A) est délimité par deux butées (46, 47).

Ledit bras articulé (42) comporte avantageusement en sus un ressort de traction (48) lié d'une part audit châssis (2) et d'autre part à ladite bielle inférieure (45). Ledit ressort de traction (48) permet, d'une part, de maintenir ledit incorporateur (14) en position de transport en plaquant ladite bielle inférieure (45) contre la butée supérieure (46). D'autre part, ledit ressort de traction (48) permet également de faciliter le déplacement dudit incorporateur (14) de la position de remplissage vers la position de transport en supportant au moins une partie du poids dudit incorporateur (14). Cependant, les points d'ancrage dudit ressort de traction (48) sont avantageusement déterminés de façon à ce que, en position de remplissage, ladite bielle inférieure (45) repose contre la butée inférieure (47) malgré la force exercée par le ressort de traction (48). Ledit incorporateur (14) peut ainsi donc être aisément translaté d'une position de transport facilitant, entre autres, les opérations de pulvérisation (figures 1, 8 et 10) à une position de remplissage facilitant l'accès audit bac (40) (figure 9), et inversement.

Selon l'exemple de réalisation représenté sur les figures 8 à 10, l'utilisateur commande la vidange dudit incorporateur (14) en agissant sur une pédale (49), ladite pédale (49) actionnant à son tour une vanne de vidange (50) (figure 9). Plus précisément à la lumière des figures 2 à 10, ladite vanne de vidange (50) est connectée entre le fond dudit bac (40) et l'orifice d'aspiration (51A) d'un injecteur (51) (non représenté sur les figures 8 à 10). Le rôle dudit injecteur (51) sera décrit ultérieurement.

Dans cet exemple de réalisation, ladite pédale (49) et ladite vanne de vidange (50) constitue avantageusement un élément de sécurité empêchant toute remontée accidentelle de fluide dans ledit bac (40). En effet lorsque l'utilisateur n'agit pas sur ladite pédale (49), cette dernière maintient automatiquement ladite vanne de vidange (50) en position fermée. Pour de plus amples détails sur la commande de ladite vanne de vidange (50), l'homme de l'art pourra se référer à la demande de brevet français **00/09177**.

Selon une caractéristique de la présente invention, un déplacement dudit incorporateur (14) d'une position de transport à une position de remplissage commande la configuration dudit circuit d'eau en mode "incorporation". De plus, selon une autre caractéristique de la présente invention, un déplacement dudit incorporateur (14) d'une position de remplissage à une position de transport annule ladite configuration en mode "incorporation". Ledit circuit d'eau (11) retrouve donc la configuration utilisée auparavant.

A cet effet, dans l'exemple de réalisation représenté sur les figures 2 à 7, ledit circuit d'eau (11) comporte en sus deux vannes de coupure (52, 53). Ladite première vanne de coupure (52) est inserée entre ladite pompe (12) et ladite deuxième vanne de sélection (26). Ladite cinquième conduite (28) se compose donc de deux tronçons (28a, 28b). Le premier tronçon (28a) relie ledit orifice de refoulement (27) de ladite pompe (12) et ladite première vanne de coupure (52). Le deuxième tronçon (28b) relie, quant à lui, ladite première vanne de coupure (52) et ladite voie d'entrée (26E) de ladite deuxième vanne de selection (26). Pour sa part, ladite deuxième vanne de coupure (53) est insérée entre ladite pompe (12) et ledit injecteur (51). Ainsi, ladite deuxième vanne de coupure (53) est reliée d'une part à l'orifice de refoulement (27) de ladite pompe (12) au moyen d'une onzième conduite (54). D'autre part, ladite deuxième vanne de coupure (53) est reliée à l'orifice d'entrée (51B) dudit injecteur (51) au moyen d'une douzième conduite (55). Ledit injecteur (51) comporte également un orifice de sortie (51C) relié à ladite cuve principale (4) au moyen d'une treizième conduite (56).

Dans l'exemple de réalisation représenté sur les figures 2 à 7, ladite onzième conduite (54) n'est pas reliée directement à l'orifice de refoulement (27) de ladite pompe (12). En effet ladite onzième conduite (54) est avantageusement raccordée audit premier tronçon (28a) de ladite cinquième conduite (28). De même, ladite treizième conduite (56) n'est pas reliée directement à ladite cuve principale (4). En effet, ladite treizième conduite (56) est raccordée à ladite neuvième conduite (35). Cela permet avantageusement de réduire la longueur desdites conduites (54, 56), donc de réduire les coûts de fabrication dudit circuit d'eau (11).

Selon l'exemple de réalisation représenté sur les figures 8 à 10, lesdites vannes de coupures (52, 53) comportent respectivement un corps (57, 58) et un axe de commande (59, 60). D'une manière connue par l'homme de l'art, une rotation dudit axe de commande (59, 60) engendre l'ouverture ou la fermeture de ladite vanne de coupure correspondante (52, 53).

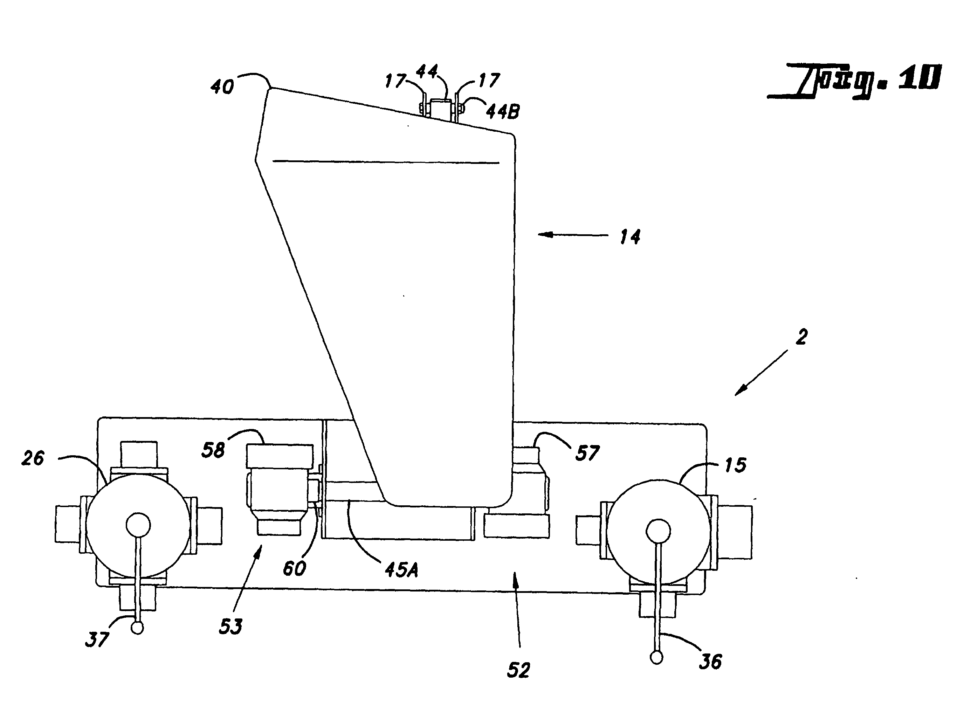

A la lumière de la figure 10, lesdits axes de commandes (59, 60) sont avantageusement liés à ladite articulation (45A). Ladite articulation (45A) étant elle-même liée en rotation à ladite bielle inférieure (45), le déplacement dudit incorporateur (14) engendre ainsi l'ouverture ou la fermeture desdites vannes de coupure (52, 53). Pour sa part, le corps respectif (57, 58) de chaque vanne de coupure (52, 53) est avantageusement lié audit châssis (2). De manière préférentielle, lesdites vannes de coupure (52, 53) sont disposées dans le voisinage immédiat de ladite articulation (45A). De ce fait, lesdits axes de commande (59, 60) peuvent être liés directement à ladite articulation (45A).

Selon l'exemple de réalisation représenté sur les figures, lesdites vannes de coupure (52, 53) sont deux vannes identiques montées, tête-bêche, à une extrémité respective de ladite articulation (45A) (figure 10). De ce fait, lesdites vannes de coupure (52,53) sont avantageusement disposées de manière qu'un déplacement dudit incorporateur (14) engendre d'une part l'ouverture de l'une desdites vannes de coupure (52, 53), et d'autre part la fermeture de l'autre desdites vannes de coupure (52, 53).

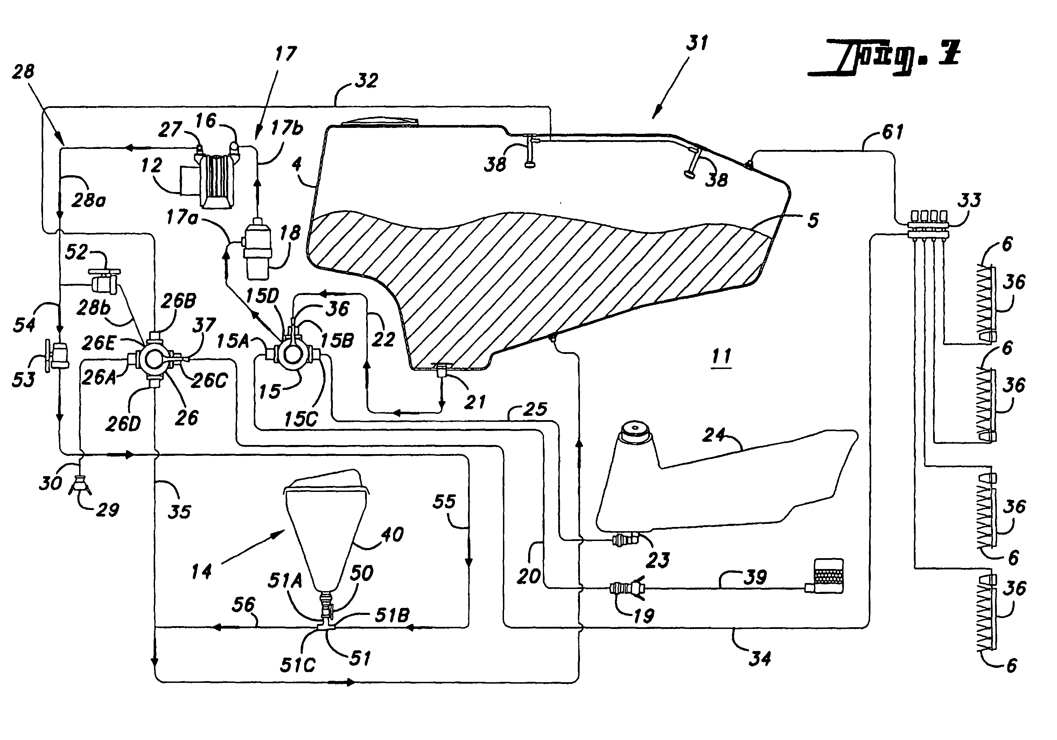

Plus précisément lorsque ledit incorporateur (14) est en position de remplissage (figure 9), ladite première vanne de coupure (52) est fermée et ladite deuxième vanne de coupure (53) est ouverte. Par conséquent, en se référant à la figure 7 où ledit circuit d'eau (11) est configuré en mode "incorporation", la totalité du fluide refoulé par ladite pompe (12) est dirigée vers ladite cuve principale (4) en traversant ledit injecteur (51). D'une manière connue de l'homme de l'art, la circulation d'un fluide par l'orifice d'entrée (51B) dudit injecteur (51) provoque une dépression au niveau dudit orifice d'aspiration (5 1A). Ainsi lorsque l'utilisateur actionne ladite pédale (49), le contenu dudit bac (40) est vidangé dans ladite cuve principale (4). Ladite première vanne de coupure (52) étant fermée, la configuration dudit circuit d'eau (11) en mode "incorporation" ne dépend donc pas de la position de ladite deuxième vanne de sélection (26). De même, l'exécution de la fonction "incorporation" est indépendante de la position de ladite première vanne de sélection (15). L'utilisateur peut ainsi avantageusement vidanger le contenu dudit bac (40) en pompant de l'eau contenue initialement dans la cuve principale (4) (figure 7), ou pompant l'eau provenant d'une source extérieure (figure 5), voire même en utilisant l'eau de la cuve de rinçage (figures 3, 4). Le déplacement dudit incorporateur (14) en position de remplissage engendre donc automatiquement la configuration dudit circuit d'eau (11) en mode "incorporation".

Par contre lorsque ledit incorporateur (14) est en position de transport (figures 1, 8 et 10), ladite première vanne de coupure (52) est ouverte et ladite deuxième vanne de coupure (53) est fermée. Par conséquent, la totalité du fluide refoulé par ladite pompe (12) est dirigée vers ladite deuxième vanne de sélection (26). Les fonctions de "remplissage", "pulvérisation", "rinçage" et "vidange" se déroulent donc comme décrit précédemment. De même, le type de fonction exécuté par ledit circuit d'eau (11) dépend à nouveau de la position desdites vannes de sélection (15, 26). Le déplacement dudit incorporateur (14) en position de transport engendre donc automatiquement l'annulation de la configuration dudit circuit d'eau (11) en mode "incorporation".

Le circuit d'eau (11) et le pulvérisateur agricole (1) qui viennent d'être décrits, ne sont que des exemples qui ne sauraient en aucun cas limiter le domaine de protection défini par les revendications suivantes.

En effet, lesdites vannes de coupure (52, 53) et ladite onzième conduite (54) peuvent être remplacées par une troisième vanne de sélection (non représentée) comportant une voie d'entrée et deux voies de sortie. Ladite voie d'entrée est reliée audit premier tronçon (28a), une première voie de sortie est reliée audit deuxième tronçon (28b), et la deuxième voie de sortie est reliée à ladite douzième conduite (55). L'axe de commande de ladite troisième vanne de sélection étant également lié à ladite articulation (45A), le déplacement dudit incorporateur (14) met en communication ladite pompe (12) soit avec ladite deuxième vanne de sélection (26), soit avec ledit injecteur (51).

Le procédé de commande, objet de la présente invention, peut également s'appliquer à un circuit d'eau dont les vannes sont pilotées par un boîtier de commande. Ledit boîtier de commande étant informé du déplacement dudit incorporateur au moyen d'un capteur, il pourra configurer ledit circuit d'eau en conséquence.

## Revendications

1. Procédé de commande de la configuration en mode "incorporation" consistant a vidanger un bac incorporateur (14) via un circuit d'eau (11) d'un pulvérisateur agricole (1) dans une cuve principale (4), le bac incorporateur (14) dudit pulvérisateur étant mobile et pouvant occuper au moins une position de transport et au moins une position de remplissage, ***caractérisé par le fait* qu'**un déplacement dudit bac incorporateur (14), d'une position de transport à une position de remplissage, commande la configuration dudit circuit d'eau (11) en mode "incorporation".

2. Procédé selon la revendication 1, ***caractérisé par le fait* qu'**un déplacement dudit bac incorporateur (14), d'une position de remplissage à une position de transport, annule ladite configuration en mode "incorporation".

3. Pulvérisateur agricole, pour la mise en oeuvre du procédé selon l'une quelconque des revendications 1 à 2, comportant:
- un châssis (2),
- un bac incorporateur mobile (14) pouvant occuper au moins une position de transport et au moins une position de remplissage, et
- un circuit d'eau (11), ledit circuit d'eau (11) comportant lui-même au moins une pompe (12), au moins une vanne (15, 26, 52, 53), et un réseau de conduites,
***caractérisé par le fait* qu'**un déplacement dudit bac incorporateur (14) engendre un changement de position d'au moins une vanne (52, 53).

4. Pulvérisateur agricole selon la revendication 3, ***caractérisé par le fait* qu'**au moins une desdites vanne(s) (52, 53), dont la position est changée lors d'un déplacement dudit bac incorporateur (14), est disposée en aval de ladite pompe (12).

5. Pulvérisateur agricole selon la revendication 3 ou 4, ***caractérisé par le fait que*** lorsque ledit bac incorporateur (14) occupe une position de remplissage, au moins une partie du fluide refoulé par ladite pompe (12) est dirigée vers ledit bac incorporateur (14).

6. Pulvérisateur agricole selon l'une des revendications 3 à 5, ***caractérisé par le fait* que** ledit bac incorporateur (14) est lié à un châssis (2) dudit pulvérisateur (1) au moyen d'au moins une articulation de type pivot (44A, 44B, 45A, 45B).

7. Pulvérisateur agricole selon la revendication 6, ***caractérisé par le fait* qu'**au moins une desdites vannes (52, 53), dont la position est changée lors d'un déplacement dudit bac incorporateur (14), est disposée dans le voisinage immédiat de l'une desdites articulations (44A, 44B, 45A, 45B).

8. Pulvérisateur agricole selon la revendication 6 ou *7,* ***caractérisé par le fait* qu'**au moins une desdites vannes (52, 53), dont la position est changée lors d'un déplacement dudit bac incorporateur (14), comporte un corps (57, 58) lié audit châssis (2) ou à une pièce solidaire dudit châssis (2).

9. Pulvérisateur agricole selon l'une des revendications 6 à 8, ***caractérisé par le fait* qu'**au moins une desdites vannes (52, 53), dont la position est changée lors d'un déplacement dudit bac incorporateur (14), comporte un axe de commande (59, 60) lié à l'une desdites articulations (44A, 44B, 45A, 45B).

10. Pulvérisateur agricole selon la revendication 9, ***caractérisé par le fait* que** ledit axe de commande (59, 60) est lié directement à l'une desdites articulations (44A, 44B, 45A, 45B).

11. Pulvérisateur agricole selon la revendication 3, ***caractérisé par le fait* qu'**un déplacement dudit bac incorporateur (14) engendre un changement de position de deux vannes (52, 53).

12. Pulvérisateur agricole selon la revendication 11, ***caractérisé par le fait* qu'**un déplacement dudit bac incorporateur (14) engendre d'une part l'ouverture d'une desdites vannes (52, 53), et d'autre part la fermeture de l'autre desdites vannes (52, 53).

13. Pulvérisateur agricole selon la revendication 11 ou 12 prise en combinaison avec la revendication 6, ***caractérisé par le fait* que** lesdites deux vannes (52, 53) comportent respectivement un axe de commande (59, 60), lesdits axes de commande (59, 60) étant liés à la même articulation (45A).

14. Pulvérisateur agricole selon la revendication 13, ***caractérisé par le fait* que** lesdites deux vannes (52, 53) sont disposées à une extrémité respective de ladite articulation (45A).

15. Pulvérisateur agricole selon l'une des revendications 3 à 14, ***caractérisé par le fait* que** ledit pulvérisateur (1) est de type traîné.

## Patentansprüche

1. Verfahren zur Ansteuerung der Konfiguration in Betriebsart "Einspülen", bei dem man einen Einspülbehälter (14) über einen Wasserkreis (11) einer Feldspritze (1) in eine Hauptwanne (4) entleert, wobei der Einspülbehälter (14) der Feldspritze beweglich ist und mindestens eine Transportposition und mindestens eine Füllposition einnehmen kann, ***dadurch gekennzeichnet,* dass** eine Bewegung des Einspülbehälters (14) aus einer Transportposition in eine Füllposition die Konfiguration des Wasserkreises (11) in Betriebsart "Einspülen" ansteuert.

2. Verfahren nach Anspruch 1, ***dadurch gekennzeichnet,* dass** eine Bewegung des Einspülbehälters (14) aus einer Füllposition in eine Transportposition die Konfiguration in Betriebsart "Einspülen" außer Kraft setzt.

3. Feldspritze zur Durchführung des Verfahrens nach irgend einem der Ansprüche 1 bis 2, die
- einen Rahmen (2),
- einen beweglichen Einspülbehälter (14), der mindestens eine Transportposition und mindestens eine Füllposition einnehmen kann, und
- einen Wasserkreis (11), der seinerseits mit mindestens einer Pumpe (12), mindestens einem Ventil (15, 26, 52, 53) und einem Leitungsnetz versehen ist,
aufweist, ***dadurch gekennzeichnet,* dass** eine Bewegung des Einspülbehälters (14) eine Positionsänderung mindestens eines Ventils (52, 53) bewirkt.

4. Feldspritze nach Anspruch 3, ***dadurch gekennzeichnet,* dass** mindestens eines der Ventile (52, 53), dessen Position bei einer Bewegung des Einspülbehälters (14) geändert wird, der Pumpe (12) nachgeschaltet ist.

5. Feldspritze nach Anspruch 3 oder 4, ***dadurch gekennzeichnet,* dass**, wenn der Einspülbehälter (14) eine Füllposition einnimmt, mindestens ein Teil des von der Pumpe (12) geförderten Fluids zum Einspülbehälter (14) geleitet wird.

6. Feldspritze nach einem der Ansprüche 3 bis 5, ***dadurch gekennzeichnet,* dass** der Einspülbehälter (14) mittels mindestens eines Drehgelenks (44A, 44B, 45A, 45B) mit einem Rahmen (2) der Feldspritze ( 1 ) verbunden ist.

7. Feldspritze nach Anspruch 6, ***dadurch gekennzeichnet,* dass** mindestens eines der Ventile (52, 53), dessen Position bei der Bewegung des Einspülbehälters (14) geändert wird, in unmittelbarer Nähe eines der Gelenke (44A, 44B, 45A, 45B) angeordnet ist.

8. Feldspritze nach Anspruch 6 oder 7, ***dadurch gekennzeichnet,* dass** mindestens eines der Ventile (52, 53), dessen Position bei einer Bewegung des Einspülbehälters (14) geändert wird, einen Körper (57, 58) aufweist, der mit dem Rahmen (2) oder einem an dem Rahmen (2) befestigten Teil verbunden ist.

9. Feldspritze nach einem der Ansprüche 6 bis 8, ***dadurch gekennzeichnet,* dass** mindestens eines der Ventile (52, 53), dessen Position bei einer Bewegung des Einspülbehälters (14) geändert wird, eine mit einem der Gelenke (44A, 44B, 45A, 45B) verbundene Ansteuerachse (59, 60) aufweist.

10. Feldspritze nach Anspruch 9, ***dadurch gekennzeichnet,* dass** die Ansteuerachse (59, 60) direkt mit einem der Gelenke (44A, 44B, 45A, 45B) verbunden ist.

11. Feldspritze nach Anspruch 3, ***dadurch gekennzeichnet,* dass** eine Bewegung des Einspülbehälters (14) eine Positionsänderung von zwei Ventilen (52, 53) bewirkt.

12. Feldspritze nach Anspruch 11, ***dadurch gekennzeichnet,* dass** eine Bewegung des Einspülbehälters (14) einerseits das Öffnen eines der Ventile (52, 53) und andererseits das Schließen des anderen der Ventile (52, 53) bewirkt.

13. Feldspritze nach Anspruch 11 oder 12 in Kombination mit Anspruch 6, ***dadurch gekennzeichnet,* dass** die zwei Ventile (52, 53) jeweils eine Ansteuerachse (59, 60) aufweisen, wobei die Ansteuerachsen (59, 60) mit dem gleichen Gelenk (45A) verbunden sind.

14. Feldspritze nach Anspruch 13, ***dadurch gekennzeichnet,* dass** die beiden Ventile (52, 53) an einem jeweiligen Ende des Gelenks (45A) angeordnet sind.

15. Feldspritze nach einem der Ansprüche 3 bis 14, ***dadurch gekennzeichnet,* dass** die Feldspritze (1) eine Anhängefeldspritze ist.

## Claims

1. Method for controlling the configuration to the "induction" mode, consisting in emptying an induction unit reservoir (14) via a water circuit (11) of an agricultural sprayer (1) in a main tank (4), the induction unit reservoir (14) of said sprayer being mobile and able to occupy at least one transport position and at least one filling position, ***characterized in* that** a movement of said induction unit reservoir (14) from a transport position into a filling position controls the configuration of said water circuit (11) to the "induction" mode.

2. Method according to Claim 1, ***characterized in* that** a movement of said induction unit reservoir (14) from a filling position to a transport position cancels said configuration in "induction" mode.

3. Agricultural sprayer for implementing the method according to any one of Claims 1 and 2, comprising:
- a chassis (2),
- a mobile induction unit reservoir (14) capable of occupying at least one transport position and at least one filling position, and
- a water circuit (11), said water circuit (11) itself comprising at least one pump (12), at least one valve (15, 26, 52, 53) and a set of pipes,
***characterized in* that** a movement of said induction unit reservoir (14) causes a change in position of at least one valve (52, 53).

4. Agricultural sprayer according to Claim 3, ***characterized in* that** at least one of said valve(s) (52, 53), the position of which is changed during a movement of said induction reservoir (14), is arranged downstream of said pump (12).

5. Agricultural sprayer according to Claim 3 or 4, ***characterized in* that**, when said induction unit reservoir (14) occupies a filling position, at least some of the fluid delivered by said pump (12) is directed toward said induction unit reservoir (14).

6. Agricultural sprayer according to one of Claims 3 to 5, ***characterized in* that** said induction unit reservoir (14) is connected to a chassis (2) of said sprayer (1) by means of at least one articulation of the pivot type (44A, 44B, 45A, 45B).

7. Agricultural sprayer according to Claim 6, ***characterized in* that** at least one of said valves (52, 53), the position of which is changed when said induction unit reservoir (14) is moved, is arranged in close proximity to one of said articulations (44A, 44B, 45A, 45B).

8. Agricultural sprayer according to Claim 6 or 7, ***characterized in* that** at least one of said valves (52, 53), the position of which is changed when said induction unit reservoir (14) is moved, has a body (57, 58) connected to said chassis (2) or to a part secured to said chassis (2).

9. Agricultural sprayer according to one of Claims 6 to 8, ***characterized in* that** at least one of said valves (52, 53), the position of which is changed when said induction unit reservoir (14) is moved, comprises an operating rod (59, 60) connected to one of said articulations (44A, 44B, 45A, 45B).

10. Agricultural sprayer according to Claim 9, ***characterized in* that** said operating rod (59, 60) is connected directly to one of said articulations (44A, 44B, 45A, 45B).

11. Agricultural sprayer according to Claim 3, ***characterized in* that** a movement of said induction unit reservoir (14) gives rise to a change in position of two valves (52, 53).

12. Agricultural sprayer according to Claim 11, ***characterized in* that** a movement of said induction unit reservoir (14) causes, on the one hand, one of said valves (52, 53) to open and, on the other hand, the other of said valves (52, 53) to close.

13. Agricultural sprayer according to Claim 11 or 12 taken in combination with Claim 6, ***characterized in* that** said two valves (52, 53) respectively have an operating rod (59, 60), said operating rods (59, 60) being connected to the same articulation (45A).

14. Agricultural sprayer according to Claim 13, ***characterized in* that** said two valves (52, 53) are arranged at a respective end of said articulation (45A).

15. Agricultural sprayer according to one of Claims 3 to 14, ***characterized in* that** said sprayer (1) is of the trailed type.
